# EUROPEAN PATENT APPLICATION

(11) **EP 4 778 818 A1**
(43) Date of publication of application: **22.07.2026**
(21) Application number: 24864144.1
(22) Date of filing: 11.06.2024
(51) Int. Cl.: B62K 25/24, B62K 25/04, B62K 21/00

(54) **VEHICLE**

(30) Priority: 14.09.2023 CN 202311188489
(71) Applicant: NINEBOT INTELLIGENCE (CHANGZHOU) TECHNOLOGY CO., LTD., Changzhou, Jiangsu 213000 (CN)
(72) Inventor: LIN, Peiyan, Changzhou, Jiangsu 213000 (CN); LI, Wei, Changzhou, Jiangsu 213000 (CN); MA, Lingyuan, Changzhou, Jiangsu 213000 (CN)
(74) Representative: Pfenning, Meinig & Partner mbB
(86) International application number: PCT/CN2024/098517
(87) International publication number: WO 2025/055419

(57) **Abstract**

A vehicle, including a vehicle frame, a front wheel (300), a front suspension (100), and a handlebar (200), where the front suspension (100) includes a first swing arm (30), a second swing arm (40), a front shock absorber (20), a front fork assembly (10), and a steering mechanism (50). The front fork assembly (10) includes a fork arm (11) and a fork frame (12) that are rotatable relative to each other; and the fork arm (11) is configured to mount the front wheel (300). Both ends of the first swing arm (30) and the second swing arm (40) along a second direction are respectively rotatably connected to the fork frame (12) and the vehicle frame. Along a first direction, both ends of the front shock absorber (20) are respectively connected to the second swing arm (40) and the fork frame (12); along the second direction, the front shock absorber (20) is located on a side of the fork frame (12) away from the vehicle frame. The handlebar (200) is connected to the fork arm (11) via the steering mechanism (50), and the steering mechanism (50) is configured to control the front fork assembly (10) to steer. According to the present vehicle, the front shock absorber (20) can be provided on an outer side of the front fork assembly (10), reducing an overall installation space of the front suspension (100) and facilitating vehicle miniaturization.

## Description

This application claims priority to Chinese Patent Application No. 202311188489.5, filed with the China National Intellectual Property Administration on September 14, 2023 and entitled "VEHICLE", the content of which is hereby incorporated by reference in its entirety.

### TECHNICAL FIELD

The present application relates to the technical field of vehicles and, in particular, to a vehicle.

### BACKGROUND

A front suspension of a motorcycle transmits up and down vibrations of a front wheel caused by bumps and sudden braking to a front shock absorber. A spring in the front shock absorber extends or compresses and works together with a damper, ensuring effective ground contact of the front wheel and maintaining an overall height of the vehicle, while also reducing the vibrations and providing a comfortable riding experience.

A current front fork-type suspension generally includes a front fork assembly, a first swing arm, a second swing arm, and a front shock absorber, where the front wheel is provided at bottom of the front fork assembly, the first swing arm and the second swing arm are provided between the front fork assembly and a vehicle frame, and the front shock absorber is provided between the second swing arm and the vehicle frame, thereby achieving ground grip and shock absorption when the vehicle encounters bumps or sudden braking. However, the above front shock absorber is usually provided on a side of the front fork assembly facing the vehicle frame, occupying a large installation space and not conducive to vehicle miniaturization.

### SUMMARY

In view of the above problems, the embodiments of the present application provide a vehicle, in which a front shock absorber can be provided on an outer side of a front fork assembly, reducing an overall installation space of a front suspension and facilitating vehicle miniaturization.

To achieve the above objectives, the embodiments of the present application provide the following technical solutions.

The present embodiments provide a vehicle, including: a vehicle frame, a front wheel, a front suspension, and a handlebar; where the front suspension includes a first swing arm, a second swing arm, a front shock absorber, a front fork assembly, and a steering mechanism; the front fork assembly includes a fork arm and a fork frame, the fork frame is rotatably connected to the fork arm, a bottom of the fork arm is configured to mount the front wheel, and the fork frame is configured to mount the first swing arm, the second swing arm, and the front shock absorber; along a first direction, the first swing arm is arranged at an interval above the second swing arm, and both ends of the first swing arm and the second swing arm along a second direction are respectively rotatably connected to the fork frame and the vehicle frame; along the first direction, both ends of the front shock absorber are respectively connected to the second swing arm and the fork frame, and along the second direction, the front shock absorber is located on a side of the fork frame away from the vehicle frame; the handlebar is connected to the fork arm via the steering mechanism, and the steering mechanism is configured to receive a steering force from the handlebar and control the front fork assembly to steer.

In an optional embodiment, along the second direction, the second swing arm includes a first end and a second end that are opposite to each other; the first end of the second swing arm is located on the side of the fork frame away from the vehicle frame and forms a mounting portion, the mounting portion is configured to connect to a bottom end of the front shock absorber; the second end of the second swing arm is rotatably connected to the vehicle frame.

In an optional embodiment, the first swing arm and the second swing arm are U-shaped in their overall structures; along a third direction, the first swing arm and the second swing arm are respectively sleeved on an outer side of the fork frame, and the second end of each of the first swing arm and the second swing arm at least includes a closed section.

In an optional embodiment, the second swing arm further includes a rotating portion; along the second direction, the rotating portion is located between the mounting portion and the second end of the second swing arm.

In an optional embodiment, the fork arm includes a steering tube, the steering tube extends along the first direction; the steering tube is inserted into the fork frame and rotatable relative to the fork frame; a top end of the steering tube is connected to the steering mechanism.

In an optional embodiment, the steering mechanism includes a first rotating base, a first cross shaft, a second rotating base, a second cross shaft, and a hinge assembly; along the first direction, the first rotating base is provided above the second rotating base, and the hinge assembly is provided between the first rotating base and the second rotating base; the first rotating base is sleeved and fixed on the steering tube, one end of the hinge assembly is connected to the first rotating base via the first cross shaft to form a first universal joint, and the other end of the hinge assembly is connected to the second rotating base via the second cross shaft to form a second universal joint; the second rotating base is configured to connect to the handlebar to receive a steering force.

In an optional embodiment, the hinge assembly includes a first rotating arm and a second rotating arm; the first rotating arm includes two first support arms, first ends of the two first support arms are rotatably connected to two oppositely provided rotating shafts of the first cross shaft, and the remaining two rotating shafts of the first cross shaft are rotatably connected to the first rotating base to form the first universal joint; second ends of the first support arms are rotatably connected to the second rotating arm.

In an optional embodiment, the second rotating arm includes two second support arms, first ends of the second support arms are rotatably connected to two oppositely disposed rotating shafts of the second cross shaft, and the remaining two rotating shafts of the second cross shaft are rotatably connected to the second rotating base to form the second universal joint; and
second ends of the second support arms are rotatably connected to the first support arms.

In an optional embodiment, the handlebar further includes a handlebar rotating shaft; the second rotating base is provided with a connecting hole for connecting to the handlebar and an insertion hole for rotatably connecting to the handlebar rotating shaft; the handlebar rotating shaft is inserted into the insertion hole and rotatable relative to the second rotating base; the handlebar is fixedly connected to the second rotating base via a connecting bolt inserted into the connecting hole, so as to apply a steering force to the second rotating base.

Compared with the related technology, the vehicle provided by the embodiments of the present application has the following advantages:
For the vehicle provided by the embodiments of the present application, the front shock absorber of its front suspension is provided on the side of the front fork assembly away from the vehicle frame, i.e., the front shock absorber is provided on the outer side of the front fork assembly, and upper and lower ends of the front shock absorber are respectively connected to a lower swing arm and top of the front fork assembly. Up-and-down vibration of the front wheel caused by bumps and sudden braking is transmitted to the front shock absorber to achieve a shock absorption effect.

Compared with a solution in the related technology where the front shock absorber is usually provided on a side of the front fork assembly facing the vehicle frame, in the embodiments of the present application, the front shock absorber is provided on the outer side of the front fork assembly without occupying an internal space between the front fork assembly and the vehicle frame, reducing an overall installation space of the front suspension and facilitating vehicle miniaturization.

Furthermore, in the embodiments of the present application, the steering mechanism is connected to the fork arm of the front fork assembly and is independently provided from the front shock absorber. Compared with a solution in the related technology where the front shock absorber and a steering device are integrally provided, the steering mechanism is not affected by the front shock absorber during steering, which can reduce moment of inertia and improve controllability.

In addition to the technical problems solved by the above embodiments of the present application, the technical features constituting the technical solutions, and the beneficial effects brought by these technical features of these technical solutions, other technical problems that the vehicle provided by the embodiments of the present application can solve, other technical features included in the technical solutions, and the beneficial effects brought by these technical features will be further explained in detail in the Description of Embodiments.

### BRIEF DESCRIPTION OF DRAWINGS

To more clearly illustrate the technical solutions in the embodiments of the present application or the prior art, a brief introduction to the accompanying drawings required for describing the embodiments or the prior art will be provided below. It is evident that the accompanying drawings described below are some embodiments of the present application, and for a person of ordinary skill in the art, other accompanying drawings can be obtained based on these accompanying drawings without creative effort.
FIG. 1 is a schematic overall structural diagram of a handlebar, a front wheel and a front suspension provided in an embodiment of the present application.
FIG. 2 is a schematic structural diagram I of a front suspension provided in an embodiment of the present application.
FIG. 3 is a schematic structural diagram II of a front suspension provided in an embodiment of the present application.
FIG. 4 is a schematic structural diagram of a front fork assembly provided in an embodiment of the present application.
FIG. 5 is a schematic exploded diagram of a front fork assembly provided in an embodiment of the present application.
FIG. 6 is a schematic structural diagram of a first swing arm provided in an embodiment of the present application.
FIG. 7 is a schematic structural diagram of a second swing arm provided in an embodiment of the present application.
FIG. 8 is a schematic structural diagram I of a steering mechanism provided in an embodiment of the present application.
FIG. 9 is a schematic structural diagram II of a steering mechanism provided in an embodiment of the present application.
FIG. 10 is a schematic connection diagram of a steering mechanism and a handlebar provided in an embodiment of the present application.
FIG. 11 is a schematic structural diagram of a second rotating base provided in an embodiment of the present application.

### Explanation of reference numerals:

10 - front fork assembly; 11 - fork arm; 12 - fork frame; 13 - steering tube; 20 - front shock absorber; 30 - first swing arm; 40 - second swing arm; 41 - rotating portion; 50 - steering mechanism; 51 - first rotating base; 52 - first cross shaft; 53 - hinge assembly; 531 - first rotating arm; 532 - second rotating arm; 54 - second cross shaft; 55 - second rotating base; 551 - insertion hole; 552 - connecting hole; 100 - front suspension; 200 - handlebar; 210 - handlebar rotating shaft; 300 - front wheel; 400 - vehicle frame.

### DESCRIPTION OF EMBODIMENTS

A front suspension in related technology occupies a large installation space, which is not conducive to a miniaturization design of a front end of a vehicle frame. The inventor found that the reason for such problem is that the front suspension includes a front shock absorber and a front fork assembly, and the front shock absorber is provided between the front fork assembly and the vehicle frame along a front-rear extension direction of the vehicle, increasing the installation space at the front end of the vehicle frame, which is not conducive to vehicle miniaturization.

In response to the above problem, the embodiments of the present application provide a vehicle, in which a front shock absorber is provided on a side of a front fork assembly away from a vehicle frame, i.e., the front shock absorber is provide on an outer side of the front fork assembly, enabling a reasonable use of a front space of the front fork assembly.

Compared with a solution in the related technology where the front shock absorber is usually provided on a side of the front fork assembly facing the vehicle frame, in the embodiments of the present application, the front shock absorber is provided on the outer side of the front fork assembly, which enables the reasonable use of the front space of the front fork assembly without occupying an internal space between the front fork assembly and the vehicle frame, thus reducing an overall installation space of the front suspension and facilitating vehicle miniaturization.

To make the above objectives, features and advantages of the embodiments of the present application more obvious and understandable, the technical solutions in the embodiments of the present application are described clearly and completely below. Obviously, the described embodiments are only some embodiments of the present application, rather than all of them. All other embodiments obtained by a person of ordinary skill in the art without creative work based on the embodiments of the present application shall fall within the protection scope of the present application.

The vehicle provided by the embodiments of the present application may be a two-wheeled vehicle or a three-wheeled vehicle. For example, the vehicle may be a two-wheeled electric vehicle and a two-wheeled motorcycle. The present embodiments have no limitation on this. The present embodiments are described by taking a two-wheeled electric vehicle or a two-wheeled motorcycle as an example.

For the convenience of describing the vehicle provided by the embodiments of the present application, a coordinate system in the accompanying drawings needs to be explained: a Z-axis direction is a first direction, which is defined as an up-down direction of the vehicle; a Y-axis direction is a second direction, which is defined as a front-rear direction of the vehicle; an X-axis direction is a third direction, which is defined as a left-right direction of the vehicle.

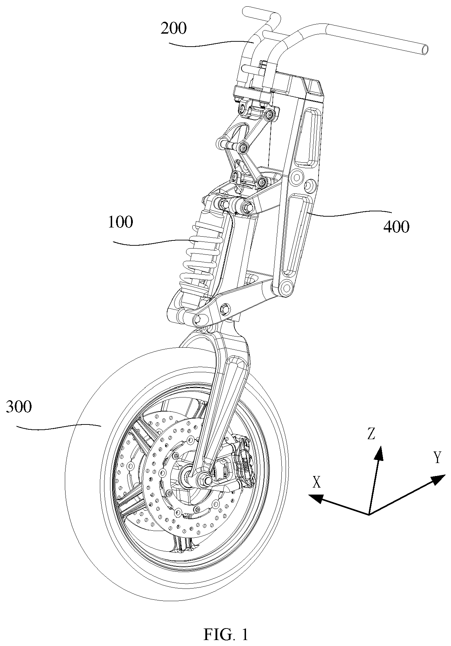

As shown in FIG. 1, the vehicle provided by the embodiments of the present application is a two-wheeled vehicle, the two-wheeled vehicle includes a vehicle frame, a front suspension 100, a rear suspension (not shown), a front wheel 300, a rear wheel (not shown), and a handlebar 200. Along the second direction, the rear suspension is connected to a rear end of the vehicle frame, and along the first direction, the rear wheel is mounted at bottom of the rear suspension. The rear suspension is configured such that when the vehicle travels on a bumpy road or brakes, the rear suspension can keep the rear wheel in contact with the ground and provide shock absorption.

Along the second direction, the front suspension 100 is mounted at a front end of the vehicle frame and provided close to the handlebar 200. Along the first direction, the front wheel 300 is provided at bottom of the front suspension 100, and the handlebar 200 is provided at top of the front suspension 100. Rotating the handlebar 200 can drive the front wheel 300 to steer. Similarly, the front suspension 100 is configured such that when the vehicle travels on a bumpy road or brakes, the front suspension 100 can keep the front wheel 300 in contact with the ground and provide shock absorption, thereby realizing ground grip and shock absorption when the vehicle encounters bumps or sudden braking.

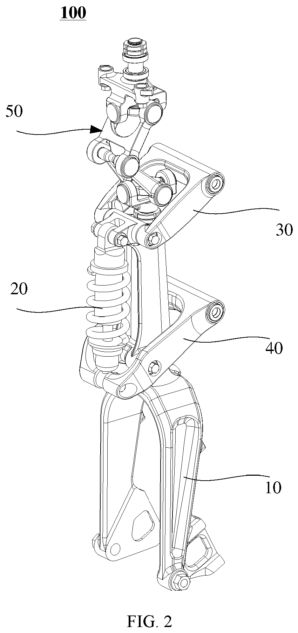

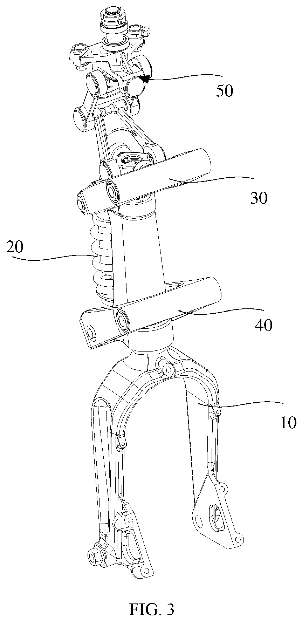

As shown in FIGS. 2 and 3, the front suspension 100 provided by the embodiments of the present application includes a first swing arm 30, a second swing arm 40, a front shock absorber 20, a front fork assembly 10, and a steering mechanism 50. Where the front fork assembly 10 includes a fork arm 11 and a fork frame 12, the fork frame 12 is rotatably connected to the fork arm 11, the fork arm 11 is configured to mount the front wheel 300, and the fork frame 12 is configured to mount the first swing arm 30, the second swing arm 40, and the front shock absorber 20.

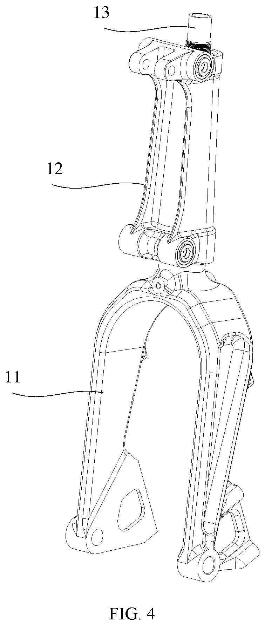

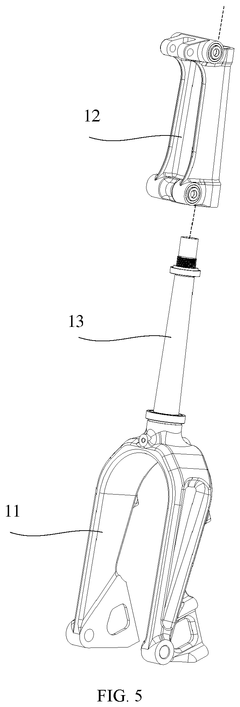

As shown in FIGS. 4 and 5, the front fork assembly 10 in the embodiments of the present application includes the fork arm 11 and the fork frame 12. Along the first direction, the fork arm 11 and the fork frame 12 are provided up and down, where the fork frame 12 is provided above the fork arm 11 and sleeved on the fork arm 11, and both of them are rotatable relative to each other. A bottom end of the fork arm 11 is configured to mount the front wheel 300, and a top end of the fork arm 11 passes through the fork frame 12 to be connected to the steering mechanism 50. Furthermore, the steering mechanism 50 is connected to the handlebar 200 to receive a steering force from the handlebar 200 and control the front fork assembly 10 to steer, so as to realize steering of the front wheel 300.

Exemplarily, the fork arm 11 includes a steering tube 13 extending along the first direction, a bottom end of the steering tube 13 is fixedly connected to a body the fork arm, and the other end of the steering tube 13 is inserted into the fork frame 12. The fork frame 12 is provided with a steering hole in cooperation with the steering tube 13, and a bearing is provided between the steering hole and the steering tube 13 to enable the steering tube 13 to rotate relative to the fork frame 12. A top end of the steering tube 13 protrudes from the fork frame 12 and is connected to the steering mechanism 50 to receive the steering force from the handlebar 200 and transmit the steering force to the body of the fork arm through the steering tube 13, thereby driving the front wheel 300 to steer.

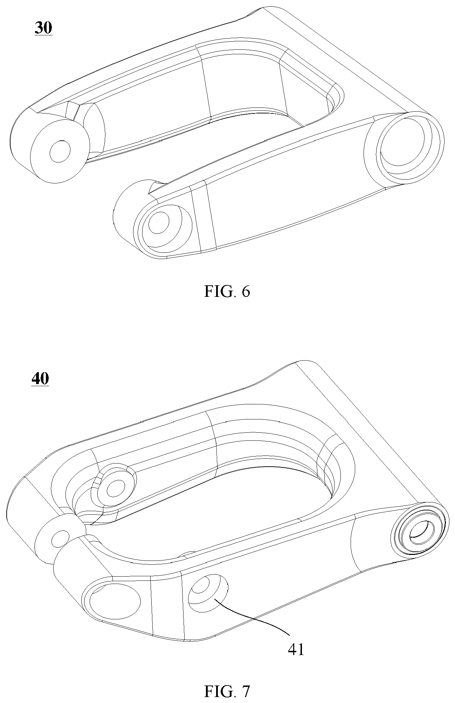

As shown in FIGS. 6 and 7, and in combination with FIG. 2, the first swing arm 30 and the second swing arm 40 in the embodiments of the present application are arranged at an interval and opposite to each other along the first direction, and the first swing arm 30 is provided above the second swing arm 40. The first swing arm 30 and the second swing arm 40 extend along the second direction, and each of the first swing arm 30 and the second swing arm 40 includes a first end and a second end that are oppositely provided. The first end of the first swing arm 30 and the second end of the second swing arm 40 are each rotatably connected to the fork frame 12.

The second end of the first swing arm 30 and the second end of the second swing arm 40 are each rotatably connected to the vehicle frame 400, such that when the first swing arm 30 and the second swing arm 40 receive an elastic force from the front shock absorber 20, the first swing arm 30 and the second swing arm 40 can swing relative to the vehicle frame 400.

For example, the first swing arm 30 and the second swing arm 40 are U-shaped in their overall structures and each sleeved on an outer side of the fork frame 12. The second end of each of the first swing arm 30 and the second swing arm 40 is a closed section, and the second end of each of the first swing arm 30 and the second swing arm 40 is provided with a conventional rotating shaft hole, and is rotatably connected to the vehicle frame 400 via a rotating shaft or hinge bolt inserted into the rotating shaft hole.

The first end of the first swing arm 30 is provided with a first opening, the first opening is provided in cooperation with a top end of the fork frame 12 to enable the top end of the fork frame 12 to be embedded in the first opening. A rotating shaft or a hinge bolt is provided between the first end of the first swing arm 30 and the top end of the fork frame 12 to achieve a rotational connection between them.

The first end of the second swing arm 40 is provided with a second opening, a rotating shaft hole is provided at a position, close to the second opening, on a side wall of the fork frame 12. The second swing arm 40 is rotatably connected to the side wall of the fork frame 12 via a rotating shaft or hinge bolt inserted into the rotating shaft hole.

The second swing arm 40 is further configured to carry the front shock absorber 20, and the second opening of the second swing arm 40 is provided to be in cooperation with a connecting lug at a bottom end of the front shock absorber 20 to enable the connecting lug to be mounted in the second opening. A rotating shaft or a hinge bolt is inserted between the second swing arm 40 and the bottom end of the front shock absorber 20 to realize a connection between them.

Furthermore, along the second direction, the front shock absorber 20 is provided on a side of the fork frame 12 away from the vehicle frame 400, i.e., the front shock absorber 20 is provided on an outer side of the vehicle frame 400. The front shock absorber 20 extends obliquely along the first direction. One end of the front shock absorber 20 is connected to the top end of the fork frame 12, and the other end of the front shock absorber 20 is connected to the second swing arm 40. Along the second direction, a connection point between the front shock absorber and the second swing arm is located in front of a connection point between the front shock absorber 20 and the fork frame 12. For example, a mounting lug is provided at the top end of the fork frame 12, and a connecting lug is provided at a top end of the front shock absorber 20, the top end of the fork frame 12 is connected to the top end of the front shock absorber 20 via a hinge bolt or rotating shaft inserted between the connecting lug and the mounting lug.

Compared with a solution in the related technology where the front shock absorber is usually provided on a side of the front suspension facing the vehicle frame, in the embodiments of the present application, the front shock absorber 20 is provided on the outer side of the front suspension 100, without occupying an internal space between the front fork assembly 10 and the vehicle frame 400, reducing an overall installation space of the front suspension 100 and facilitating vehicle miniaturization.

Furthermore, in the embodiments of the present application, the steering mechanism 50 is connected to the fork arm 11 of the front fork assembly 10 and is independently provided from the front shock absorber 20. Compared with a solution in the related technology where the front shock absorber 20 and a steering device are integrally arranged, the steering mechanism 50 in the embodiments of the present application is not affected by the front shock absorber 20 during steering, which can reduce the moment of inertia and improve controllability. Meanwhile, the actuation trajectory of the front shock absorber 20 is relatively vertical, resulting in smaller variations in the trail and wheelbase. This can prevent the handlebar 200 from jolting during steering and further improve controllability.

Referring to FIGS. 2 and 7, in the embodiments of the present application, the first end of the second swing arm 40 is located on a side of the fork frame 12 away from the vehicle frame 400 and forms a mounting portion, that is, along the second direction, a part of the second swing arm 40 protrudes from the fork frame 12 and forms the mounting portion.

Furthermore, the mounting portion is configured to connect to the bottom end of the front shock absorber 20. For example, the mounting portion is provided with a rotating shaft or a hinge bolt, and the bottom end of the front shock absorber 20 is provided with a connecting lug. A connection between the front shock absorber 20 and the mounting portion is realized by inserting the rotating shaft or the hinge bolt into the connecting lug.

Correspondingly, the second swing arm 40 is rotatably connected to the fork frame 12. Along the third direction, the fork frame 12 is provided with a rotating shaft hole extending therethrough, and the second swing arm 40 is provided with a rotating portion 41, the rotating portion 41 may be a mounting hole in cooperation with the rotating shaft hole. A rotating shaft or a hinge bolt is inserted between the rotating portion 41 and the fork frame 12 to achieve a rotational connection between them. Furthermore, the rotating portion may be provided between the first end and the second end of the second swing arm 40, for example, the rotating portion may be provided at a middle position of the second swing arm 40 along the second direction. The embodiments of the present application have no limitation on this.

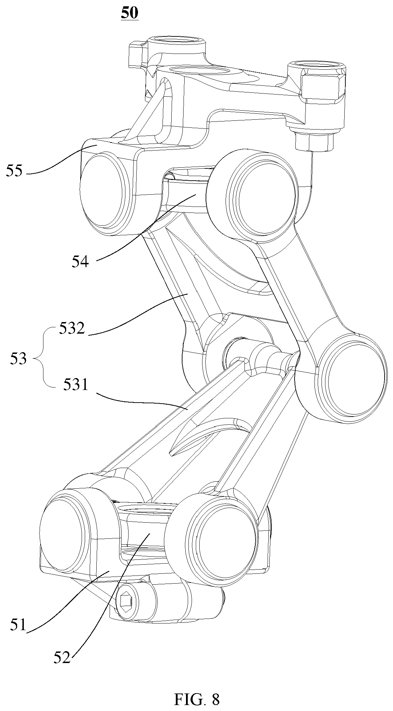

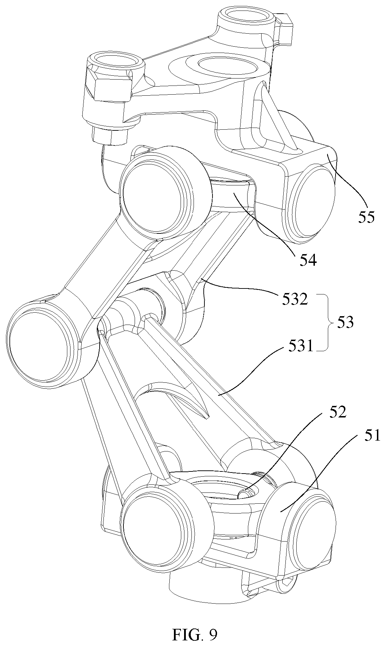

As shown in FIGS. 8 and 9, the steering mechanism 50 provided by the embodiments of the present application includes a first rotating base 51, a first cross shaft 52, a second rotating base 55, a second cross shaft 54, a hinge assembly 53, and a second rotating base 55. Along the first direction, the first rotating base 51 is provided below the second rotating base 55, and the hinge assembly 53 is provided between the first rotating base 51 and the second rotating base 55. The second rotating base 55 is configured to receive the steering force and transmit the steering force to the first rotating base 51 via the hinge assembly 53.

The first rotating base 51 is provided above the fork frame 12, sleeved on the steering tube 13, and connected to the steering tube 13 by a hoop structure, so that the first rotating base 51 and the steering tube 13 rotate synchronously. The first cross shaft 52 is provided on the first rotating base 51 and the first cross shaft 52 is rotatably connected to the first rotating base 51 and the hinge assembly 53, respectively, to form a first universal joint. That is, one end of the hinge assembly 53 close to the first rotating base 51 is connected to the first rotating base 51 via the first cross shaft 52 to form the first universal joint.

The hinge assembly 53 extends along the first direction, one end of the hinge assembly 53 away from the first rotating base 51 is rotatably connected to the second cross shaft 54, and the second cross shaft 54 is provided below the second rotating base 55 and rotatably connected to the second rotating base 55, such that the hinge assembly 53, the second cross shaft 54 and the second rotating base 55 form a second universal joint. That is, the other end of the hinge assembly 53 is connected to the second rotating base 55 via the second cross shaft 54 to form the second universal joint.

Specifically, the hinge assembly 53 includes a first rotating arm 531 and a second rotating arm 532, each of the first cross shaft 52 and the second cross shaft 54 includes four rotating shafts provided in a cross shape. The four rotating shafts are divided into two groups, and each group includes two oppositely provided rotating shafts.

The first rotating arm 531 includes two first support arms. First ends of the two first support arms are respectively rotatably connected to two oppositely disposed rotating shafts of one group of the first cross shaft 52, the other two oppositely disposed rotating shafts of the other group of the first cross shaft 52 are rotatably connected to the first rotating base 51, so that the first rotating arm 531 and the first rotating base 51 form the first universal joint via the first cross shaft 52. It should be noted that each rotating shaft of the first cross shaft 52 is sleeved with a bearing so as to achieve a rotatable connection with the first rotating arm 531 and the first rotating base 51 respectively.

Second ends of the first rotating arm 531 are rotatably connected to the second rotating arm 532. The second rotating arm 532 includes two second support arms provided in cooperation with the first support arms. A rotating shaft is provided between the second support arms and the first support arms, and both ends of the rotating shaft are respectively provided with a bearing connected to the first support arms and the second support arms to enable a rotational connection between the second support arms and the first support arms.

Furthermore, first ends of the two second support arms are respectively rotatably connected to two oppositely provided rotating shafts of one group of the second cross shaft 54, the other two oppositely provided rotating shafts of the other group of the second cross shaft 54 are rotatably connected to the second rotating base 55, so that the second rotating arm 532 and the second rotating base 55 form the second universal joint via the second cross shaft 54. It should be noted that each rotating shaft of the second cross shaft 54 is sleeved with a bearing so as to achieve a rotatable connection to the second rotating arm 532 and the second rotating base 55, respectively.

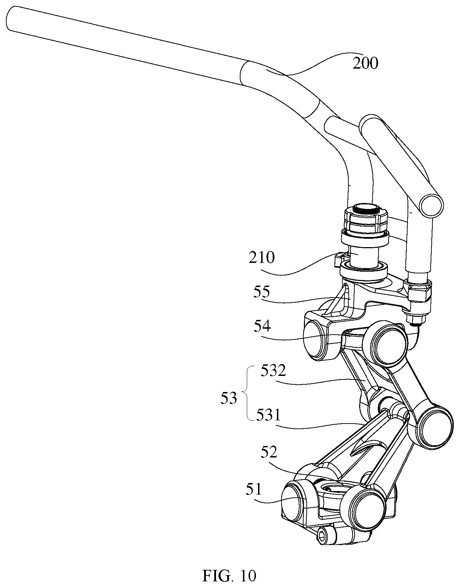

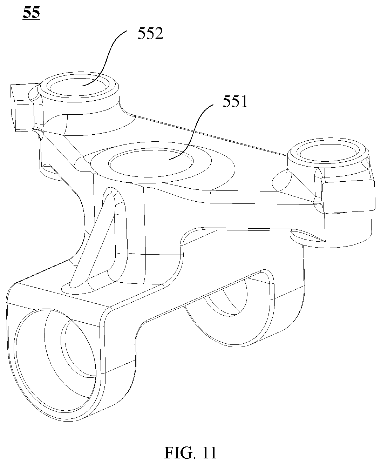

As shown in FIGS. 10 and 11, the second rotating base 55 is configured to receive a steering force. Specifically, the second rotating base 55 is provided with a connecting hole 552 and an insertion hole 551. The connecting hole 552 is provided in cooperation with the handlebar 200, i.e., a position at which the connecting hole 552 is located is in cooperation with the handlebar 200, the handlebar 200 is fixedly connected to the second rotating base 55 via a connecting bolt inserted into the connecting hole 552. Steering the handlebar 200 can drive the second rotating base 55 to rotate, so the second rotating base 55 can receive the steering force and transmit the steering force to the second cross shaft 54, the hinge assembly 53, the first cross shaft 52, the first rotating base 51 and the steering tube 13 in sequence, and the front wheel 300 can be further driven to steer.

Furthermore, the insertion hole 551 is provided in cooperation with a handlebar rotating shaft 210; the handlebar rotating shaft 210 is inserted into the insertion hole 551 and rotatable relative to the second rotating shaft. A rotation axis of the rotating shaft 210 of the handlebar may be aligned with a rotation axis of the steering tube 13, i.e., the two rotation axes are on a same straight line.

In the embodiments of the present application, the handlebar 200 is connected to the front fork assembly 10 via the above steering mechanism 50. This can not only eliminate the problem of unequal steering speed to make the vehicle have better controllability but also reduce the static friction force of suspension actuation, enabling better absorption of fine vibrations.

The embodiments or implementations in the present specification are described in a progressive manner, with each embodiment emphasizing its differences from other embodiments. The same and similar parts between the embodiments may be referred to each other.

It should be noted that the terms "an embodiment", "embodiment", "exemplary embodiment", "some embodiments" etc. mentioned in the specification indicate that the described embodiment may include specific features, structures or characteristics, but not every embodiment necessarily includes the specific features, structures or characteristics. In addition, such phrases do not necessarily refer to the same embodiment. In addition, when describing specific features, structures, or characteristics in conjunction with embodiments, it is within the knowledge of those skilled in the art to implement such features, structures, or characteristics in conjunction with other embodiments that are explicitly or not explicitly described.

In general, terms should be understood at least partially based on the usage in the context. For example, at least partially based on the context, the term "one or more" used herein may be used to describe any feature, structure, or characteristic in a singular sense, or a combination of features, structures, or characteristics in a plural sense. Similarly, terms such as "a" or "the" may be understood to convey a singular usage or a plural usage, at least partially based on the context.

Finally, it should be noted that the above embodiments are only used to illustrate the technical solutions of the present application and not to limit them. Although the present application has been described in detail with reference to the foregoing embodiments, a person of ordinary skill in the art should understand that modifications may still be made to the technical solutions described in the foregoing embodiments, or equivalent substitutions may be made to some or all of the technical features therein. Such modifications or substitutions do not make the essence of the corresponding technical solutions depart from the scope of the technical solutions of the embodiments of the present application.

## Claims

1. A vehicle, comprising: a vehicle frame, a front wheel, a front suspension, and a handlebar;
wherein the front suspension comprises a first swing arm, a second swing arm, a front shock absorber, a front fork assembly, and a steering mechanism;
the front fork assembly comprises a fork arm and a fork frame, the fork frame is rotatably connected to the fork arm, a bottom of the fork arm is configured to mount the front wheel, and the fork frame is configured to mount the first swing arm, the second swing arm, and the front shock absorber;
along a first direction, the first swing arm is arranged at an interval above the second swing arm, and both ends of the first swing arm and the second swing arm along a second direction are respectively rotatably connected to the fork frame and the vehicle frame;
along the first direction, both ends of the front shock absorber are respectively connected to the second swing arm and the fork frame, and along the second direction, the front shock absorber is located on a side of the fork frame away from the vehicle frame;
the handlebar is connected to the fork arm via the steering mechanism, and the steering mechanism is configured to receive a steering force from the handlebar and control the front fork assembly to steer.

2. The vehicle according to claim 1, wherein along the second direction, the second swing arm comprises a first end and a second end that are opposite to each other;
the first end of the second swing arm is located on the side of the fork frame away from the vehicle frame and forms a mounting portion, the mounting portion is configured to connect to a bottom end of the front shock absorber;
the second end of the second swing arm is rotatably connected to the vehicle frame.

3. The vehicle according to claim 2, wherein the first swing arm and the second swing arm are U-shaped in their overall structures;
along a third direction, the first swing arm and the second swing arm are respectively sleeved on an outer side of the fork frame, and the second end of each of the first swing arm and the second swing arm at least comprises a closed section.

4. The vehicle according to claim 3, wherein the second swing arm further comprises a rotating portion;
along the second direction, the rotating portion is located between the mounting portion and the second end of the second swing arm.

5. The vehicle according to any one of claims 1 to 4, wherein the fork arm comprises a steering tube, the steering tube extends along the first direction;
the steering tube is inserted into the fork frame and rotatable relative to the fork frame; a top end of the steering tube is connected to the steering mechanism.

6. The vehicle according to claim 5, wherein the steering mechanism comprises a first rotating base, a first cross shaft, a second rotating base, a second cross shaft, and a hinge assembly;
along the first direction, the first rotating base is provided above the second rotating base, and the hinge assembly is provided between the first rotating base and the second rotating base;
the first rotating base is sleeved and fixed on the steering tube, one end of the hinge assembly is connected to the first rotating base via the first cross shaft to form a first universal joint, and the other end of the hinge assembly is connected to the second rotating base via the second cross shaft to form a second universal joint;
the second rotating base is configured to connect to the handlebar so as to receive the steering force.

7. The vehicle according to claim 6, wherein the hinge assembly comprises a first rotating arm and a second rotating arm;
the first rotating arm comprises two first support arms, first ends of the two first support arms are rotatably connected to two oppositely provided rotating shafts of the first cross shaft, and the remaining two rotating shafts of the first cross shaft are rotatably connected to the first rotating base to form the first universal joint;
second ends of the first support arms are rotatably connected to the second rotating arm.

8. The vehicle according to claim 7, wherein the second rotating arm comprises two second support arms, first ends of the second support arms are rotatably connected to two oppositely disposed rotating shafts of the second cross shaft, and the remaining two rotating shafts of the second cross shaft are rotatably connected to the second rotating base to form the second universal joint;
second ends of the second support arms are rotatably connected to the first support arms.

9. The vehicle according to claim 6, wherein the handlebar further comprises a handlebar rotating shaft;
the second rotating base is provided with a connecting hole for connecting to the handlebar and an insertion hole for rotatably connecting to the handlebar rotating shaft;
the handlebar rotating shaft is inserted into the insertion hole and rotatable relative to the second rotating base;
the handlebar is fixedly connected to the second rotating base via a connecting bolt inserted into the connecting hole so as to apply the steering force to the second rotating base.

10. The vehicle according to claim 9, wherein a rotation axis of the handlebar rotating shaft and a rotation axis of the steering tube are on a same straight line.
